# EUROPÄISCHE PATENTSCHRIFT

(11) **EP 0 589 258 B1**
(45) Veröffentlichungstag und Bekanntmachung des Hinweises auf die Patenterteilung: **09.04.1997**
(21) Anmeldenummer: 93114070.1
(22) Anmeldetag: 02.09.1993
(51) Int. Cl.: F16K 27/02, B29C 45/14

(54) **Kunststoffkörper**
Plastic body
Corps en matière plastique

(30) Priorität: 18.09.1992 DE 4231343
(43) Veröffentlichungstag der Anmeldung: 30.03.1994
(73) Patentinhaber: GEBRÜDER MÜLLER APPARATEBAU GmbH & Co. KG, D-74653 Ingelfingen 2 (DE)
(72) Erfinder: Müller, Fritz, D-74653 Ingelfingen 2 (DE)
(74) Vertreter: Leyh, Hans, Dr.-Ing.

(56) Entgegenhaltungen:
- DE-U- 1 888 844
- FR-A- 421 531
- US-A- 2 936 776

## Beschreibung

Die Erfindung bezieht sich auf einen Kunststoffkörper nach dem Oberbegriff des Patentanspruchs 1 sowie auf ein Verfahren zur Herstellung dieses Kunststoffkörpers.

Ein als Ventil ausgebildeter Kunststoffkörper der vorstehend genannten Art ist aus DE-U-1 888 844 bekannt. Hierbei wird die Innenwandung von einer dünnwandigen Schicht aus sinterbarem Kunststoff als chemisch hochbeständiges Kunststoffmaterial gebildet, während der eigentliche Ventilkörper aus glasfaserverstärktem Kunststoff als mechanisch hochfestes Kunststoffmaterial besteht.

Bei einem Ventil nach US-A-2 936 776 wird auf einem Außenkörper eine chemisch beständige Auskleidung nach dem Herstellen des Außenkörpers aufgebracht.

Aus FR-A-421 531 ist ein Ventil mit einem aus zwei Elementen bestehenden Aufbau bekannt.

Von der Industrie, insbesondere der Elektronikindustrie aus den Bereichen der Mikroelektronik und der Chip-Herstellung werden metallarme oder wenn möglich metallfreie Ausführungen von Armaturen, Fittings und Ventilen gefordert, die bei der Herstellung dieser Produkte Verwendung finden, da offenbar durch Metallteile die Reinheit von elektronischen Chips beeinträchtigt wird.

Der Erfindung liegt die Aufgabe zugrunde, einen Kunststoffkörper für ein Ventil oder Fitting bereitzustellen, welcher metallarm und vorzugsweise metallfrei ausgeführt ist.

Nach der Erfindung wird hierzu ein Kunststoffkörper bereitgestellt, der im Patentanspruch 1 angegeben ist.

Desweiteren wird die genannte Aufgabe nach der Erfindung durch ein Verfahren gemäß Patentanspruch 4 gelöst.

Bei der Ausbildung des Kunststoffkörpers als Ventil wird erreicht, daß sich die sonst üblichen aus Metall bestehenden Schrauben vermeiden lassen, mittels welchen gewöhnlich Oberteil und Unterteil des Ventilgehäuses zusammengeschraubt sind.

Bevorzugte Ausführungsformen des Kunststoffkörpers sind in den Ansprüchen 2 und 3 angegeben.

Eine beispielsweise Ausführungsform der Erfindung wird nachfolgend anhand der Zeichnung im einzelnen erläutert, in der

Figur 1 im Schnitt ein Ventil nach der Erfindung mit einem Innenkörper aus einem chemisch hochbeständigen Material und einem Außenkörper aus einem hochfesten Material zeigt.

Figur 2 zeigt im Schnitt einen Fitting aus einem chemisch hochbeständigen Material, auf den ein Gewinde aus einem hochfesten Material aufgespritzt ist.

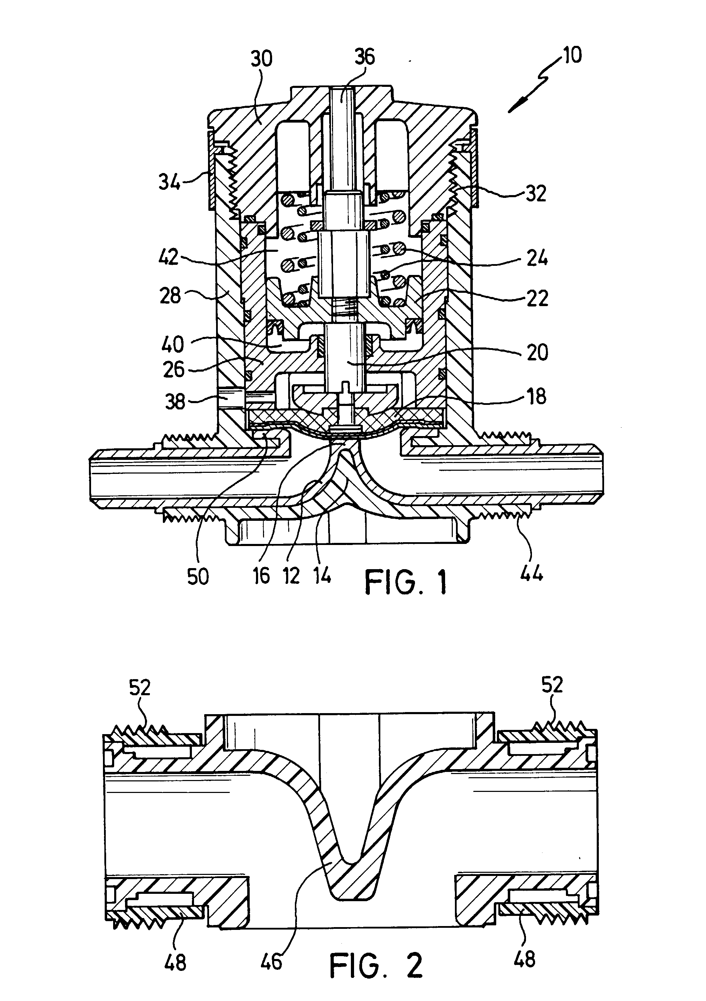

Figur 1 zeigt im Schnitt schematisch ein Ventil 10 bestehend aus einem Grundkörper oder Innenkörper 12, der die nicht näher bezeichneten Anschlußleitungen für Zulauf und Ablauf und einen Ventilsitz 16 umfaßt.
Der Innenkörper 12 besteht aus einem hochreinen und hochbeständigen Material auf Perfluoralkoxy-Basis, kurz PFA genannt.
Dieser Innenkörper 12 wird von einem ihn mindestens teilweise umschließenden Außenkörper 14 gehalten und abgestützt, der aus einem hochfesten Material auf Polyvinylidenfluorid-Basis besteht, kurz PVDF genannt.
Mit dem Ventilsitz 16 wirkt eine Membran 18 zusammen, die mit einem Ventilstössel 20 verbunden ist, der seinerseits einen fest mit ihm verbundenen Kolben 22 trägt, der bei der dargestellten Ausführungsform durch Federn 24 ständig in Schließrichtung des Ventils beaufschlagt ist.
Der in Achsrichtung des Ventils bewegliche Kolben 22 ist in einer Kolbenlaufbüchse 26 geführt, die ihrerseits fest im Gehäuse 28 des Ventils eingebaut ist.
Das Gehäuse 28 ist ein Teil des Außenkörpers 14, der vom Bereich des Innenkörpers 12 her, den er umschließt, in Achsrichtung des Ventils insbesondere zylindrisch hochgezogen ist unter Bildung des Gehäuses 28, in das die Kolbenlaufbüchse 26 eingesetzt ist.
Das Gehäuse 28 ist in seinem oberen Ende durch einen Deckel 30 geschlossen, der mit einem Außengewinde in ein Innengewinde 32 des Gehäuses 28 eingeschraubt ist.
Eine Abdeckhülse 34 deckt den Übergang vom Gehäuse 28 zum Deckel 30 ab. Das obere Ende des Ventilstössels 20 ist durch einen zylindrischen Zapfen verlängert, der eine Stellungsanzeige 36 bildet, welche die Stellung des Ventils von außen erkennbar anzeigt. Eine Entlüftungsbohrung 38 entlüftet den Raum zwischen der Membran 18 und der Unterseite der Kolbenlaufbüchse 26. Die letztere wird durch den Deckel 30 gegen die Membran 18 angedrückt, die hierdurch zwischen der Kolbenlaufbüchse 26 und einem am Innenkörper 12 ausgebildeten Ringflansch 50 eingespannt ist.
Wie bereits ausgeführt, wird das Ventil durch Federkraft geschlossen, wobei in Figur 1 die geschlossene Stellung dargestellt ist. Durch Einführen eines Druckmittels, z. B. Druckluft in eine Kammer 40 unterhalb des Kolbens 22 wird das Ventil gegen die Kraft der Federn 24 geöffnet.
Auf die Federn 24 kann aber verzichtet werden, wobei bei dieser, nicht gezeigten Ausführungsform, zum Schließen des Ventils Druckluft in eine Kammer 42 oberhalb des Kolbens 22 und zum Öffnen, wie bereits ausgeführt, Druckluft in die Kammer 40 unterhalb des Kolbens 22 eingeführt wird. Die Anschlüsse für die Zufuhr und Abfuhr dieser Steuer-Druckluft sind nicht dargestellt.
Durch das Hochziehen des Außenkörpers 14 unter Bildung des Gehäuses 28 kann auf Verbindungsschrauben verzichtet werden, mit denen sonst üblicherweise Oberteil und Unterteil des Ventilgehäuses zusammengeschraubt werden. Hierdurch wird eine metallarme Ausführung erreicht, wie sie vor allem von der Mikroelektronik-Industrie gefordert wird, wie eingangs erläutert wurde. Verzichtet man darüberhinaus auf die Federn 24 und steuert die Bewegung des Ventilkolbens 22 nur durch Druckluft, so erreicht man eine vollständige metallfreie Ausführungsform des Ventiles, da alle übrigen Teile des Ventils ebenfalls aus Kunststoff bestehen.
Der Außenkörper 14 mit dem Gehäuse 28 besteht, wie oben ausgeführt, aus einem hochfesten Kunststoffmaterial. Dies ermöglicht es, direkt am Außenkörper 14 und am Gehäuse 28 das bereits genannte Gewinde 32 zum Einschrauben des Deckels 30 sowie Anschlußgewinde 44 für nicht gezeigte Anschlußleitungen auszubilden.

Figur 2 zeigt im Schnitt einen Fitting 46 aus einem hochbeständigen Kunststoffmaterial auf Perfluoralkoxy-Basis oder aus mit Talkum verstärktem Polypropylen. Dieser Fitting kann ein Innenkörper eines Ventils sein wie der Innenkörper 12 nach Figur 1, er kann aber auch ein Rohrleitungsstück, ein Verzweigungsstück oder eine sonstige Armatur sein.
Der Fitting 46 ist an seinen beiden Enden jeweils mit einer das jeweilige Ende außen umschließenden Gewindebüchse 48 versehen, an der ein Außengewinde 52 beispielsweise zum Anschluß von Rohrleitungen ausgebildet ist. Die Gewindebüchsen 48 bestehen aus dem hochfesten Kunststoffmaterial auf PVDF-Basis oder auf glasfaser-verstärkter Polypropylen-Basis.

Bei der Herstellung wird zunächst der Innenkörper 12, 46 in an sich bekannter Weise gespritzt, worauf der Innenkörper nach dem Erkalten in eine geeignete Form eingelegt wird und der Außenkörper 14, 28 bzw. die Gewindebüchsen 48 auf den jeweiligen Innenkörper aufgespritzt werden.
Mit der vorbeschriebenen Ausführungsform (Fig. 1) läßt sich somit eine metallfreie Bauweise beispielsweise von Ventilen erreichen. Der Innenkörper hat hierbei die gewünschte Beständigkeit gegenüber dem Durchflußmedium, das z. B. chemisch aggressiv sein kann, während der Außenkörper die erforderliche mechanische Festigkeit hat, um den Innenkörper abzustützen, die Antriebselemente des Ventils aufzunehmen und die Ausbildung von Gewinden zu ermöglichen.

## Patentansprüche

1. Kunststoffkörper mit einem von einem Medium durchströmten Innenkörper (12; 46) aus chemisch hochbeständigem Kunststoffmaterial und einem diesen umgebenden Außenkörper (14, 28; 48, 52) aus einem mechanisch hochfesten Kunststoffmaterial, **dadurch gekennzeichnet**, daß auf den zuerst gespritzten Innenkörper (12; 46) der Außenkörper (14, 28; 48, 52) aufgespritzt ist, und daß der Außenkörper (14) bei einem Ventil (10) in Richtung seiner Mittelachse zur einteiligen Ausbildung eines Ventilgehäuses (28) verlängert ist oder bei einem Fitting der Außenkörper ein aufgespritztes Gewinde (48, 52) bildet.

2. Kunststoffkörper nach Anspruch 1, **dadurch gekennzeichnet**, daß der Innenkörper (12; 46) aus einem Kunststoffmaterial auf Perfluoralkoxy-Basis bzw. mit Talkum verstärkter Polypropylen-Basis und der Außenkörper (14, 28; 48, 52) aus einem Kunststoffmaterial auf Polyvinylidenfluorid-Basis bzw. glasfaser-verstärkter Polypropylen-Basis besteht.

3. Kunststoffkörper nach Anspruch 1 oder 2, **dadurch gekennzeichnet**, daß bei dem Ventil (10) am Außenkörper (14) und dem mit ihm einteilig ausgebildeten Gehäuse (28) Gewinde (32, 34) ausgebildet sind.

4. Verfahren zur Herstellung eines Kunststoffkörpers nach einem der Ansprüche 1 bis 3, **dadurch gekennzeichnet,** daß der Innenkörper (12; 46) zuerst gespritzt wird, daß der so gespritzte Innenkörper (12; 46) dann in eine Form eingelegt wird und der Außenkörper (14, 28; 48, 52) auf den Innenkörper (12, 46) aufgespritzt wird.

## Claims

1. Plastic body having an inner body (12; 46) of highly chemically resistant plastic material with medium flowing through it and surrounding this an outer body (14, 28; 48, 52) of a highly mechanically resistant plastic material, characterised in that the outer body (14, 28; 48,52) is sprayed onto the initially injection-moulded inner body (12; 46), and in that the outer body (14) in the case of a valve (10) is extended in the direction of its central axis for integral design of a valve housing (28), or in the case of a fitting the outer body forms a sprayed-on thread (48, 52).

2. Plastic body according to claim 1, characterised in that the inner body (12; 46) consists of a plastic material based on perfluoroalkoxy or based on polypropylene reinforced with talcum, and the outer body (14, 28; 48, 52) consists of a plastic material based on polyvinylidene fluoride or based on glass fibre-reinforced polypropylene.

3. Plastic body according to claim 1 or 2, characterised in that in the case of the valve (10) threads (32, 34) are formed on the outer body (14) and the housing (28) designed to be integral with it.

4. Process for producing a plastic body according to one of claims 1 to 3, characterised in that the inner body (12; 46) is initially injection moulded, in that the inner body (12; 46) thus injection moulded is then placed in a mould and the outer body (14, 28; 48, 52) is sprayed onto the inner body (12, 46).

## Revendications

1. Corps en matière plastique comportant un corps intérieur (12; 46) en matière plastique à forte résistance chimique et, autour, un corps extérieur (14, 28; 48, 52) en matière plastique à résistance mécanique élevée, caractérisé en ce que, sur le corps intérieur (12; 46) d'abord coulé par injection, est appliqué par enduction le corps extérieur (14, 28; 48, 52) et en ce que le corps extérieur (14) est prolongé par une soupape (10) dans la direction de son axe médian pour former d'une seule pièce un carter de soupape (28) ou, pour un raccord, le corps extérieur forme un filetage (48, 52) qui est aspergé au pistolet.

2. Corps en matière plastique suivant la revendication 1, caractérisé en ce que le corps intérieur (12; 46) est en matière plastique à base de perfluoroalcoxy (poly(tétrafluoroéthylène/éthers vinyliques perfluorés)) ou à base de polypropylène renforcé avec du talc, et le corps extérieur est en matière plastique à base de poly(fluorure de vinylidène) ou à base de polypropylène renforcé de fibres de verre.

3. Corps en matière plastique suivant la revendication 1 ou 2, caractérisé en ce que, pour la soupape (10) sur le corps extérieur (14) et l'enveloppe (28) ne formant avec lui qu'une seule pièce, sont formés les filetages (32, 34).

4. Procédé de fabrication d'un corps en matière plastique suivant l'une des revendications 1 à 3, caractérisé en ce que le corps intérieur (12; 46) est d'abord coulé par injection, que le corps intérieur (12; 46) ainsi coulé par injection est ensuite mis dans un moule et que le corps extérieur (14, 28; 48, 52) est appliqué par enduction sur le corps intérieur (12, 46).
